# EUROPEAN PATENT APPLICATION

(11) **EP 3 032 418 A1**
(43) Date of publication of application: **15.06.2016**
(21) Application number: 14849725.8
(22) Date of filing: 19.09.2014
(51) Int. Cl.: G06F 9/50

(54) **PERMISSION CONTROL METHOD AND DEVICE**

(30) Priority: 27.09.2013 CN 201310451660
(71) Applicant: Huawei Device Co., Ltd., Shenzhen, Guangdong 518129 (CN)
(72) Inventor: HUANG, Jiejing, Shenzhen Guangdong 518129 (CN); HUANG, Xi, Shenzhen Guangdong 518129 (CN)
(74) Representative: Gill Jennings & Every LLP
(86) International application number: PCT/CN2014/086877
(87) International publication number: WO 2015/043420

(57) **Abstract**

This application provides a permission control method and apparatus. The method includes: acquiring an application type of an application program; and determining, from a system resource access permission corresponding to the application type of the application program, a target system resource access permission of the application program according to a preset correspondence between different application types and different system resource access permissions, so as to control, according to the target system resource access permission, access of the application program to a system resource. According to embodiments of this application, a permission control operation is simple, and permission control efficiency is improved.

## Description

This application claims priority to Chinese Patent Application No. 201310451660.7, filed with the Chinese Patent Office on September 27, 2013 and entitled "PERMISSION CONTROL METHOD AND APPARATUS", which is incorporated herein by reference in its entirety.

### TECHNICAL FIELD

This application relates to the field of electronic technologies, and in particular, to a permission control method and apparatus.

### BACKGROUND

As electronic technologies and communications technologies develop, an increasing quantity of application programs can be installed on an electronic device. An application program may apply, according to an application function to be implemented, for an access permission to access multiple system resources, for example, an access permission for system resources such as a system log, stored content, a network communications function, a microphone, and a camera.

However, some system resource access permissions applied for by many existing application programs are not necessary for the application programs to implement functions thereof or are irrelevant to the application programs; or for system resource access permissions applied for by an application program, a user may not want the application program to have some system resource access permissions. Therefore, it is required to perform permission control over the system resource access permissions of the application program.

During implementation of the present invention, the inventor finds that, in an existing permission control method, a user usually performs selection one by one on multiple system resource access permissions applied for by an application program, so that the application program has only a system resource access permission selected by the user, and accesses a corresponding system resource in a running process according to the system resource access permission selected by the user. However, this manner is complicated in operation, and permission control efficiency is reduced especially when there is a larger quantity of application programs.

### SUMMARY

In view of this, this application provides a permission control method and apparatus, so as to resolve technical problems in the prior art that a permission control operation is complex and efficiency is relatively low.

To achieve the foregoing objective, this application provides the following technical solutions:

According to a first aspect, a permission control method is provided, including:
acquiring an application type of an application program; and
determining, from a system resource access permission corresponding to the application type of the application program, a target system resource access permission of the application program according to a preset correspondence between different application types and different system resource access permissions, so as to control, according to the target system resource access permission, access of the application program to a system resource.

In a first possible implementation manner of the first aspect, the determining, from a system resource access permission corresponding to the application type of the application program, a target system resource access permission of the application program according to a preset correspondence between different application types and different system resource access permissions includes:
searching the preset correspondence between different application types and different system resource access permissions, to determine the system resource access permission corresponding to the application type of the application program; and
using a system resource access permission that is from the system resource access permission corresponding to the application type of the application program and is the same as a system resource access permission applied for by the application program as the target system resource access permission of the application program.

In a second possible implementation manner of the first aspect, the determining, from a system resource access permission corresponding to the application type of the application program, a target system resource access permission of the application program according to a preset correspondence between different application types and different system resource access permissions includes:
searching the preset correspondence between different application types and different system resource access permissions, and selecting the system resource access permission corresponding to the application type of the application program as the target system resource access permission of the application program.

With reference to the first aspect or either of the foregoing possible implementation manners of the first aspect, a third possible implementation manner of the first aspect is further provided, and the acquiring an application type of an application program includes:
when the application program is provided by a third-party device, acquiring an application type of the application program provided by the third-party device.

With reference to the first aspect or any one of the foregoing possible implementation manners of the first aspect, a fourth possible implementation manner of the first aspect is further provided, and the acquiring an application type of an application program includes:
acquiring an application type, set by a user, of the application program.

In a fifth possible implementation manner of the first aspect, the determining, from a system resource access permission corresponding to the application type of the application program, a target system resource access permission of the application program according to a preset correspondence between different application types and different system resource access permissions includes:
when it is detected that the application program is being installed or the application program is running, determining, from the system resource access permission corresponding to the application type of the application program, the target system resource access permission of the application program according to the preset correspondence between different application types and different system resource access permissions.

In a sixth possible implementation manner of the first aspect, if the application program has multiple application types, the determining, from a system resource access permission corresponding to the application type of the application program, a target system resource access permission of the application program according to a preset correspondence between different application types and different system resource access permissions includes:
searching the preset correspondence between different application types and different system resource access permissions, and determining the target system resource access permission of the application program from a set consisting of system resource access permissions separately corresponding to the multiple application types of the application program.

According to a second aspect, a permission control apparatus is provided, including:
a type acquiring module, configured to acquire an application type of an application program; and
a permission control module, configured to determine, from a system resource access permission corresponding to the application type of the application program, a target system resource access permission of the application program according to a preset correspondence between different application types and different system resource access permissions, so as to control, according to the target system resource access permission, access of the application program to a system resource.

In a first possible implementation manner of the second aspect, the permission control module is specifically configured to: search the preset correspondence between different application types and different system resource access permissions, to determine the system resource access permission corresponding to the application type of the application program; and use a system resource access permission that is from the system resource access permission corresponding to the application type of the application program and is the same as a system resource access permission applied for by the application program as the target system resource access permission of the application program.

In a second possible implementation manner of the second aspect, the permission control module is specifically configured to: search the preset correspondence between different application types and different system resource access permissions, and select the system resource access permission corresponding to the application type of the application program as the target system resource access permission of the application program.

With reference to the second aspect or either of the foregoing possible implementation manners of the second aspect, a third possible implementation manner of the second aspect is further provided, and the type acquiring module is specifically configured to: when the application program is provided by a third-party device, acquire an application type of the application program provided by the third-party device.

With reference to the second aspect or any one of the foregoing possible implementation manners of the second aspect, a fourth possible implementation manner of the second aspect is further provided, and the type acquiring module is specifically configured to acquire an application type, set by a user, of the application program.

In a fifth possible implementation manner of the second aspect, the permission control module is specifically configured to: when it is detected that the application program is being installed or the application program is running, determine, from the system resource access permission corresponding to the application type of the application program, the target system resource access permission of the application program according to the preset correspondence between different application types and different system resource access permissions.

In a sixth possible implementation manner of the second aspect, if the application program has multiple application types, the permission control module is specifically configured to: search the correspondence between different application types and different system resource access permissions, and determine the target system resource access permission of the application program from a set consisting of system resource access permissions separately corresponding to the multiple application types of the application program.

It can be known from the foregoing technical solutions that, compared with the prior art, this application provides a permission control method and apparatus. An application type of an application program is acquired, and a target system resource access permission of the application program is determined, from a system resource access permission corresponding to the application type of the application program, according to a correspondence between different application types and different system resource access permissions, so that a system can control, according to the target system resource access permission, access of the application program to a system resource. The target system resource access permission of the application program can be determined after the application type of the application program is determined; therefore, a permission control operation is simple, and efficiency is high.

### BRIEF DESCRIPTION OF DRAWINGS

To describe the technical solutions in the embodiments of this application or in the prior art more clearly, the following briefly introduces the accompanying drawings required for describing the embodiments or the prior art. Apparently, the accompanying drawings in the following description show merely the embodiments of this application, and a person of ordinary skill in the art may still derive other drawings from these accompanying drawings without creative efforts.
FIG. 1 is a flowchart of an embodiment of a permission control method according to an embodiment of this application;
FIG. 2 is a flowchart of another embodiment of a permission control method according to an embodiment of this application;
FIG. 3 is a flowchart of still another embodiment of a permission control method according to an embodiment of this application;
FIG. 4 is a flowchart of still another embodiment of a permission control method according to an embodiment of this application; and
FIG. 5 is a schematic diagram of a structure of an embodiment of a permission control apparatus according to an embodiment of this application.

### DESCRIPTION OF EMBODIMENTS

The following clearly describes the technical solutions in the embodiments of this application with reference to the accompanying drawings in the embodiments of this application. Apparently, the described embodiments are merely some but not all of the embodiments of this application. All other embodiments obtained by a person of ordinary skill in the art based on the embodiments of this application without creative efforts shall fall within the protection scope of this application.

One of main ideas of this application may include:

An application type of an application program is acquired, and a target system resource access permission of the application program is determined, from a system resource access permission corresponding to the application type of the application program, according to a correspondence between different application types and different system resource access permissions, so that a system can control, according to the target system resource access permission, access of the application program to a system resource. Because the target system resource access permission of the application program can be determined after the application type of the application program is determined, a user does not need to perform selection and setting one by one. An operation is simple, and control efficiency is high.

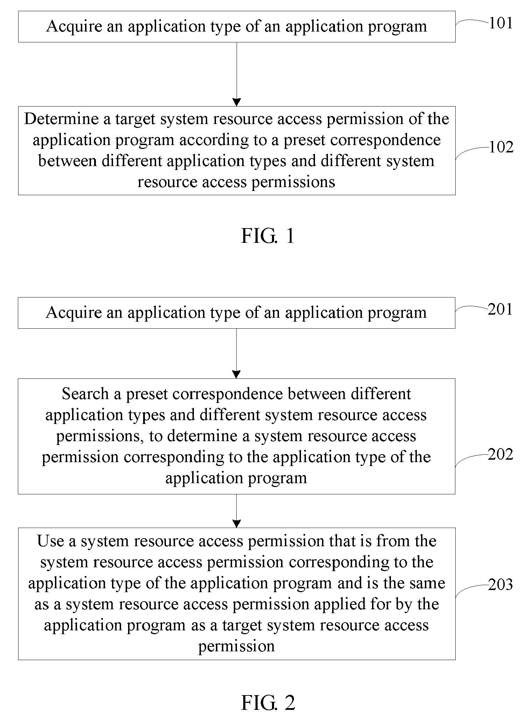

FIG. 1 is a flowchart of an embodiment of a permission control method according to an embodiment of this application. The method may include the following steps:
Step 101: Acquire an application type of an application program.
Step 102: Determine, from a system resource access permission corresponding to the application type of the application program, a target system resource access permission of the application program according to a preset correspondence between different application types and different system resource access permissions, so as to control, according to the target system resource access permission, access of the application program to a system resource.

The system resource includes at least a storage resource of a device, a software or hardware resource of the device, and the like. The storage resource and the software or hardware resource of the device include a built-in resource when the device is delivered from a factory, a resource added during use of the device, and the like. Using a mobile phone as an example, a system resource may include a storage resource such as address book information, system log information, call record information, and storage information of a storage card, and a software or hardware resource such as a loudspeaker, a microphone, Bluetooth, a global positioning system, a camera, network communications, a storage program, a camera shooting program, and another application program installed in a device.

The system resource access permission refers to a permission of whether an application program is authorized to use a system resource. If the application program has the system resource access permission, it indicates that the system resource may be operated. An application program installed in the device achieves utilization of the system resource by acquiring the system resource access permission.

Different application programs may apply for a system resource access permission. For example, system resource access permissions applied for by an instant messaging application program include: a Global Positioning System access permission, a network communications program access permission, a camera and camera shooting program access permission, a storage program access permission, a communications program access permission, a system tool access permission, and the like.

However, system resource access permissions applied for by many application programs are not necessary for or relevant to function implementation of the application programs. For example, system resource access permissions applied for by a photographing application program include: a Global Positioning System access permission, a communications program access permission, a network communications program access permission, a storage program access permission, and a camera and camera shooting program access permission, while system resources required to implement a function of the application program may include only a camera and camera shooting program (for starting a camera shooting module of a device to implement image acquisition) and a storage program (for writing into a device disk for storage). In this case, if the application program is attacked or stolen by malicious software, user privacy may widely leak out. In addition, a user has different requirements for system resource access permissions of different application programs.

Therefore, in this embodiment, different application types are preset, and for each application type, a system resource access permission corresponding to the application type may be determined, where the system resource access permission may be a system resource access permission necessary for an application program corresponding to the application type to implement a function thereof. Further, a correspondence between different application types and system resource access permissions may be established.

For example, the application types may include a graphical image application type, a game application type, an office application type, and a multimedia application type.

A system may preset different application types, and certainly may also set different application types according to a user request.

A system resource access permission corresponding to the graphical image application type may include a storage program access permission, a network communications program access permission, a camera and camera shooting program access permission, and the like.

A system resource access permission corresponding to the game application type may include a network communications program access permission.

An access permission of the office application type may include a storage medium and a storage program access permission.

An access permission of the multimedia application type may include a storage medium, a storage function access permission, and a network communications program access permission.

The system resource access permissions corresponding to the different application types may be preset for the different application types according to a user request, so as to establish the correspondence between the different application types and different system resource access permissions.

For each application program, an application type of the application program may be determined first, a system resource access permission corresponding to the application type of the application program is determined according to the correspondence between the different application types and different system resource access permissions, and a target system resource access permission of the application program may be determined from the system resource access permission corresponding to the application type of the application program.

The application program may have one or more application types. When the application program has only one application type, the target system resource access permission of the application program is determined from a system resource access permission corresponding to the application type.

When the application program has multiple application types, system resource access permissions corresponding to the application types of the application program include system resource access permissions separately corresponding to the multiple application types, and the target system resource access permission of the application program is determined from a set consisting of the system resource access permissions separately corresponding to the multiple application types of the application program.

Description is made by using an abstract example. When an application program has only one application type, if the application type is A and system resource access permissions corresponding to the application type A include a1, a2 and a3, then a target system resource access permission of the application program is determined from a1, a2 and a3.

When an application program has multiple application types, if the multiple application types are A, B and C respectively, system resource access permissions corresponding to the application type A include a1, a2 and a3, system resource access permissions corresponding to the application type B include b1 and b2, and system resource access permissions corresponding to the application type C include c1 and c2, then a target system resource access permission of the application program is determined from a1, a2, a3, b1, b2, c1, and c2.

The application type of the application program may be acquired in multiple implementation manners.

One possible implementation manner is: setting, by a user, an application type of the application program, and determining an application type for each application program; therefore, the acquiring an application program of an application program is specifically acquiring the application type, set by the user, of the application program.

Another possible implementation manner is: when the application program is provided by a third-party device, acquiring an application type of the application program provided by the third-party device.

The third-party device may provide multiple application programs of different application types to the user for selection, and set a type label for each application program. Therefore, when the application program is downloaded to a local device, the application type of the application program may be determined according to the type label.

The third-party device may be, for example, a service device of an application store or another platform that can provide an application program. Using a mobile phone with an Android (Android) platform as an example, the mobile phone may download an application program from a corresponding application store Google Play. Assuming that a category of the application program on Google Play is "game", that is, a type label of the application program is game, the mobile phone may correspondingly set an application type of the downloaded application program to a "game" application type.

After the target system resource access permission is determined, access of the application program to the system resource may be controlled according to the target system resource access permission. That is, when the application program is running, the application program is controlled to access only a target system resource corresponding to the target system resource access permission.

For example, if a target system resource access permission of the application program of the game application type is a network communications access permission, the application program of the game application type can be allowed to access only a resource, among system resources, related to a network communications function such as downloading or updating network data, but cannot have a permission to access other system resources, such as accessing an address book, accessing a microphone, and accessing a global positioning system to acquire a geographic location.

In this embodiment, for each to-be-installed application program or an application program that is already installed, a target system resource access permission can be determined for the application program according to the solutions described in this embodiment, and the application program accesses only a corresponding system resource according to the determined target system resource access permission. A target system resource access resource of an application program is determined according to an application type of the application program. In this way, normal use of the application program is not affected, a user does not need to set access permissions of application programs one by one, and a system can automatically determine the target system resource access permission for the application program, which implements a simple permission control operation and achieves high efficiency.

After the application type of the application program is acquired, the target system resource access permission of the application program may be determined according to the preset correspondence between different application types and different system resource access permissions when the application program is being installed or is running.

Certainly, an execution time of acquiring the application type of the application program and determining the target system resource of the application program is not specifically limited in this application. Execution may be performed in advance, or execution may be performed when the application program is being installed or when the application program is up and running.

FIG. 2 is a flowchart of another embodiment of a permission control method according to an embodiment of this application. The method may include the following steps:
Step 201: Acquire an application type of an application program.
   The acquiring an application type of an application program may be acquiring the application type of the application program when it is detected that the application program is being installed or the application program is running.
   The application type of the application program may also be acquired when an installation file of the application program is detected.
   One possible implementation manner of acquiring an application type of an application program is:
   when the application program is provided by a third-party device, acquiring an application type of the application program provided by the third-party device.

   Another possible implementation manner is:
   acquiring an application type, set by a user, of the application program.
Step 202: Search a preset correspondence between different application types and different system resource access permissions, to determine a system resource access permission corresponding to the application type of the application program.
Step 203: Use a system resource access permission that is from the system resource access permission corresponding to the application type of the application program and is the same as a system resource access permission applied for by the application program as a target system resource access permission of the application program.

System resource access permissions applied for by the application program are not always all necessary or relevant for the application program to implement a function thereof.

Therefore, in this embodiment, the system resource access permission that is from the system resource access permission corresponding to the application type of the application program and is the same as the system resource access permission applied for by the application program is selected as the target system resource access permission of the application program, and a system resource access permission that is not applied for by the application program is not used as the target system resource access permission, thereby avoiding granting an unnecessary system resource access permission to the application program.

For example, if system resource access permissions applied for by the application program include a1, a2, a4, and a5, and system resource access permissions corresponding to the application type of the application program include a1, a2, a3, b1, and b2, same system resource access permissions a1 and a2 are used as the target resource access permission of the application program.

In an actual application, the application program applies for multiple system resource access permissions, and each application type may also correspond to multiple preset system resource access permissions. Therefore, the target system resource access permission is a system resource access permission included in an intersection set between a set consisting of the system resource access permissions applied for by the application program and a set consisting of the system resource access permissions corresponding to the application type of the application program.

When the application program has multiple application types, the set of system resource access permissions corresponding to the application types of the application program includes system resource access permissions separately corresponding to the multiple application types.

After the target system resource access permission is determined, access of the application program to a system resource may be controlled according to the target system resource access permission.

For each application program detected by a device, a target system resource access permission of the application program may be determined according to the technical solution in this embodiment of this application.

In this embodiment, an application type of an application program is acquired, and a preset correspondence between different application types and different system resource access permissions is searched; in this way, a system resource access permission applied for by the application program can be determined from a system resource access permission corresponding to the application type of the application program, and the system resource access permission applied for by the application program is used as a target system resource access permission of the application program, so that the application program accesses a corresponding system resource only according to the target system resource access permission. A system resource access permission corresponding to a different application type may be a system resource access permission necessary for an application program of the application type to implement a function thereof, or may be preset by a user according to a personal intention. The target system resource access permission of the application program may be determined according to the application type of the application program and the system resource access permission corresponding to the application type. According to this embodiment of this application, setting of the target system resource access permission may be automatically implemented for the application program. Therefore, a control operation is simple, and efficiency is high.

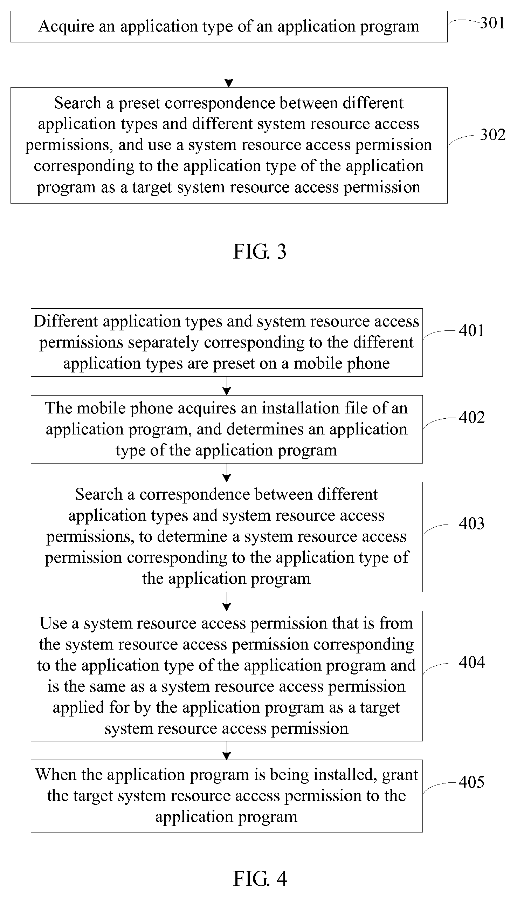

FIG. 3 is a flowchart of still another embodiment of a permission control method according to an embodiment of this application. The method may include the following steps:
Step 301: Acquire an application type of an application program.
   The acquiring an application type of an application program may be acquiring the application type of the application program when it is detected that the application program is being installed or the application program is running.
   The application type of the application program may also be acquired when an installation file of the application program is detected.
   One possible implementation manner of acquiring an application type of an application program is:
   when the application program is provided by a third-party device, acquiring an application type of the application program provided by the third-party device.

   Another possible implementation manner is:
   acquiring an application type, set by a user, of the application program.
Step 302: Search a preset correspondence between different application types and different system resource access permissions, and use a system resource access permission corresponding to the application type of the application program as a target system resource access permission of the application program.

The system resource access permission corresponding to the application type is usually included in a system resource access permission applied for by the application program. Therefore, in this embodiment, after the application type of the application program is determined, the preset correspondence between different application types and different system resource access permissions may be searched directly, and the system resource access permission corresponding to the application type of the application program is used as the target system resource access permission of the application program.

When the application program has multiple application types, the target system resource access permission includes system resource access permissions separately corresponding to the multiple application types.

After the target system resource access permission is determined, access of the application program to a system resource may be controlled according to the target system resource access permission.

In this embodiment, an application type of an application program is acquired, and a preset correspondence between different application types and different system resource access permissions is searched; in this way, a system resource access permission corresponding to the application type of the application program may be determined, and the system resource access permission is used as a target system resource access permission of the application program, so that the application program accesses a corresponding system resource only according to the target system resource access permission. A system resource access permission corresponding to a different application type may be a system resource access permission necessary for an application program of the application type to implement a function thereof, or may be preset by a user according to a personal intention, which can prevent a large amount of user privacy from being leaked or meet a personalized requirement of a user. In this embodiment, a system can determine a target system resource access permission of an application program by determining an application type of the application program, and application programs of a same application type correspond to a same target system resource access permission. According to this embodiment of this application, setting of a target system resource access permission may be automatically implemented for application programs of a same application type. Therefore, a control operation is simple, and efficiency is high.

With respect to the prior art, in this embodiment of this application, a user does not need to perform selection one by one on system resource access permissions applied for by each application program, so that permission control efficiency is improved. In particular, when there is a relatively large quantity of application programs, target system resource access permissions of application programs of a same application type may be the same, and can be set at the same time. Therefore, a permission control operation is simpler, which can significantly improve permission control efficiency.

In this embodiment of this application, preferentially, before an application program is installed, target system access permissions corresponding to application types of different application programs may be determined by using the technical solution in this application. Therefore, when the application program is being installed, the target system access permission may be granted to the application program according to an application type of the application program, so that the application program can access only a target system resource corresponding to the target system access permission in a subsequent running process.

The technical solution in this application is described in detail below with reference to an actual application scenario. As shown in FIG. 4, FIG. 4 is a flowchart of still another embodiment of a permission control method according to an embodiment of this application. The embodiment shown in FIG. 4 is described by using a specific operation on a mobile phone as an example, and the method may include the following steps:
Step 401: Different application types and system resource access permissions separately corresponding to the different application types are preset on a mobile phone.
   The preset different application types and the separately corresponding system resource access permissions may be set according to a user request, where the user request may include application types that need to be set and a system resource access permission corresponding to each application type.
Step 402: The mobile phone acquires an application program, and determines an application type of the application program.
   An installation file of the application program acquired by the mobile phone may be downloaded from an application store and provided by a service device of the application store. The application type of the application program may be determined according to a type label set by the service device of the application store for the application program.
   Certainly, the application type of the application program may also be set by a user. The mobile phone may provide a corresponding prompt interface, and the user sets the application type for the application program.
Step 403: Search a correspondence between different application types and system resource access permissions, to determine a system resource access permission corresponding to the application type of the application program.
   The application program may have multiple application types. Therefore, system resource access permissions corresponding to the application types of the application program include system resource access permissions corresponding to the multiple application types.
Step 404: Use a system resource access permission that is from the system resource access permission corresponding to the application type of the application program and is the same as a system resource access permission applied for by the application program as a target system resource access permission.
   A set consisting of the system resource access permission corresponding to the application type of the application program is intersected with a set consisting of the system resource access permission applied for by the application program, and a system resource access permission in an intersection set is the target system resource access permission.
   When the application program has multiple application types, a system resource access permission that is from a set consisting of system resource access permissions separately corresponding to the multiple application types and is the same as the system resource access permission applied for by the application program is selected as the target system resource access permission.
   The system resource access permission applied for by the application program usually includes the system resource access permission corresponding to the application type of the application program. Therefore, as another possible implementation manner, the system resource access permission corresponding to the application type of the application program may be directly used as the target system resource access permission of the application program.
Step 405: When the application program is being installed, grant the target system resource access permission to the application program.

For each application program, an application type of the application program and a corresponding target system resource access permission can be determined according to operations of step 402 to step 404.

The target system resource access permission is granted to the application program, so that the application program can access only a system resource corresponding to the target system resource access permission.

In this embodiment, a target system resource access permission of an application program may be determined according to a type of the application program and a preset correspondence between application types and system resource access permissions, so as to grant the target system resource access permission to the application program when the application program is being installed, so that the application program can access only a system resource corresponding to the target system resource access permission. In this embodiment, a permission control operation is simple, and efficiency is high.

For brief description, the foregoing method embodiments are described as a series of actions. However, a person skilled in the art should appreciate that this application is not limited to the described order of the actions, because according to this application, some steps may be performed in other orders or simultaneously. It should be further appreciated by a person skilled in the art that the embodiments described in this specification all belong to exemplary embodiments, and the involved actions and modules are not necessary for this application.

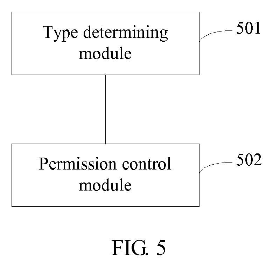

FIG. 5 is a schematic diagram of a structure of an embodiment of a permission control apparatus according to an embodiment of this application. The apparatus may include a type acquiring module 501 and a permission control module 502.

The type acquiring module 501 is configured to acquire an application type of an application program.

As one possible implementation manner, the type acquiring module 501 is specifically configured to: when the application program is provided by a third-party device, acquire an application type of the application program provided by the third-party device.

The third-party device may provide multiple application programs of different application types to the user for selection, and set a category label for each application program. Therefore, when the application program is downloaded to a local device, the application type of the application program may be determined according to the category label.

The third-party device may be, for example, a service device of an application store or another platform that can provide an application program.

As another possible implementation manner, the type acquiring module 501 is specifically configured to acquire an application type, set by a user, of the application program.

The user may set the application type of the application program according to experience or a requirement.

Execution of the type acquiring module may be triggered when it is detected that the application program is being installed or is running.

The permission control module 502 is configured to determine, from a system resource access permission corresponding to the application type of the application program, a target system resource access permission of the application program according to a preset correspondence between different application types and different system resource access permissions, so as to control, according to the target system resource access permission, access of the application program to a system resource.

The system resource includes a storage resource of a device, a software or hardware resource of the device, and the like.

The system resource access permission refers to a permission of whether an application program is authorized to use a system resource. If the application program has the system resource access permission, it indicates that the system resource may be used. An application program installed in the device achieves utilization of the system resource by acquiring the system resource access permission.

In this embodiment, different application types may be preset, and for each application type, a system resource access permission corresponding to the application type may be determined, where the system resource access permission may be a system resource access permission necessary for an application program corresponding to the application type to implement a function thereof. Further, the correspondence between different application types and system resource access permissions may be established.

The system resource access permissions corresponding to the different application types may be preset for the different application types according to a user request.

For each application program, an application type of the application program may be determined first, a system resource access permission corresponding to the application type of the application program is determined according to the correspondence between different application types and different system resource access permissions, and a target system resource access permission of the application program may be determined from the system resource access permission corresponding to the application type of the application program.

The application program may have one or more application types. When the application program has only one application type, the target system resource access permission of the application program is determined from a system resource access permission corresponding to the application type.

When the application program has multiple application types, system resource access permissions corresponding to the application types of the application program include system resource access permissions separately corresponding to the multiple application types, and the target system resource access permission of the application program is determined from a set consisting of the system resource access permissions separately corresponding to the multiple application types of the application program.

As one possible implementation manner, the permission control module 502 is specifically configured to: search the preset correspondence between different application types and different system resource access permissions, to determine the system resource access permission corresponding to the application type of the application program; and use a system resource access permission that is from the system resource access permission corresponding to the application type of the application program and is the same as a system resource access permission applied for by the application program as the target system resource access permission of the application program.

That is, the system resource access permission applied for by the application program is selected from the system resource access permission corresponding to the application type of the application program as the target system resource access permission of the application program, and a system resource access permission that is not applied for by the application program is not used as the target system resource access permission, thereby avoiding granting an unnecessary system resource access permission to the application program.

As another possible implementation manner, the permission control module 502 is specifically configured to: search the preset correspondence between different application types and different system resource access permissions, and select the system resource access permission corresponding to the application type of the application program as the target system resource access permission of the application program.

The system resource access permission corresponding to the application type is usually included in a system resource access permission applied for by the application program. Therefore, after the application type of the application program is determined, the preset correspondence between different application types and different system resource access permissions may be searched directly, and the system resource access permission corresponding to the application type of the application program is used as the target system resource access permission of the application program.

After the target system resource access permission is determined, access of the application program to the system resource may be controlled according to the target system resource access permission.

For each application program detected by a device, a target system resource access permission of the application program may be determined according to the technical solution in this embodiment of this application.

Execution of the permission control module may be triggered when it is detected that the application program is being installed or the application program is running. That is, the permission control module may be specifically configured to: when it is detected that the application program is being installed or the application program is running, determine the target system resource access permission of the application program according to the preset correspondence between different application types and different system resource access permissions.

Certainly, an execution time of the type determining module and the permission control module is not specifically limited in this application. Execution may be performed in advance, or execution may be performed when it is detected that the application program is being installed or that the application program is up and running.

In this embodiment, an application type of an application program is acquired, and a preset correspondence between different application types and different system resource access permissions is searched; in this way, and a system resource access permission corresponding to the application type of the application program can be determined, and a target system resource access permission of the application program can be further obtained, so that the application program accesses a corresponding system resource only according to the target system resource access permission. A system resource access permission corresponding to a different application type may be a system resource access permission necessary for an application program of the application type to implement a function thereof, or may be preset by a user according to a personal intention, which can prevent a large amount of user privacy from being leaked or meet a personalized requirement of a user. In this embodiment, a system can determine a target system resource access permission of an application program by determining an application type of the application program, and a user does not need to set a system resource access permission of each application program one by one. A permission control operation is simple, and efficiency is high.

In an actual application, the permission control apparatus described in this embodiment of this application may be applied to an electronic device. The electronic device may be a portable mobile electronic device such as a mobile phone and a tablet computer. The electronic device usually has an operating system, for example, an Android operating system of a mobile phone, so that various application programs can be run. An electronic device deployed with the permission control apparatus of this embodiment of this application can implement control over system resource access permissions of different application programs, and can fast determine a target system resource access permission for an application program, so as to control, according to the target system resource access permission, access of the application program to a system resource. An operation is simple, and control efficiency is high. There is no need to grant all system resource access permissions applied for by the application program to the application program, and it only needs to grant the determined target system resource access permission to the application program, so that a large amount of user privacy may be prevented from being leaked and a personalized requirement of a user may be met.

Based on the foregoing descriptions, a person skilled in the art may clearly understand that this application may be implemented by software in addition to a necessary general hardware platform. Therefore, this application further provides an electronic device. The electronic device includes at least a memory and a processor connected to the memory by using a bus.

The memory stores a permission control program.

The processor runs the permission control program.

The permission control program may include program code, where the program code includes a computer operation instruction.

The processor may be a central processing unit CPU or an application-specific integrated circuit ASIC (Application Specific Integrated Circuit), or may be configured as one or more integrated circuits for implementing the embodiments of the present invention.

The memory may include a high-speed RAM memory, and may further include a non-volatile memory (non-volatile memory), for example, at least one magnetic disk memory.

The permission control program may specifically include:
a type determining module and a permission control module.

For specific implementation of each module of the permission control program, reference may be made to corresponding modules shown in FIG. 5, and details are not described herein again.

The embodiments in this specification are all described in a progressive manner, for same or similar parts in the embodiments, reference may be made to these embodiments, and each embodiment focuses on a difference from other embodiments. The apparatus disclosed in the embodiment is basically similar to the method disclosed in the embodiment, and therefore is described briefly; for related parts, reference may be made to partial descriptions of the method.

Finally, it should be noted that in this specification, relational terms such as first and second are only used to distinguish one entity or operation from another, and do not necessarily require or imply that any actual relationship or sequence exists between these entities or operations. Moreover, the terms "include", "comprise", or their any other variant is intended to cover non-exclusive inclusion, so that a process, a method, an article, or a device that includes a list of elements not only includes those elements but also includes other elements that are not expressly listed, or further includes elements inherent to such a process, method, article, or device. An element preceded by "includes a ..." does not, without more constraints, preclude the presence of additional identical elements in the process, method, article, or device that includes the element.

For ease of description, the foregoing apparatus is described by dividing functions into various units. Certainly, during implementation of this application, the functions of each unit may be implemented in a same piece of or a plurality of pieces of software and/or hardware.

Based on the foregoing descriptions of the implementation manners, a person skilled in the art may clearly understand that this application may be implemented by software in addition to a necessary general hardware platform. Based on such an understanding, the technical solutions of this application essentially or the part contributing to the prior art may be implemented in a form of a software product. The computer software product may be stored in a storage medium, such as a ROM/RAM, a magnetic disk, or an optical disc, and includes several instructions for instructing a computer device (which may be a personal computer, a server, or a network device) to perform the methods described in the embodiments or some parts of the embodiments of this application.

The embodiments disclosed above are described to enable a person skilled in the art to implement or use this application. Various modifications to the embodiments are obvious to the person skilled in the art, and general principles defined in this specification may be implemented in other embodiments without departing from the spirit or scope of this application. Therefore, this application will not be limited to the embodiments described in this specification but extends to the widest scope that complies with the principles and novelty disclosed in this specification.

## Claims

1. A permission control method, comprising:
acquiring an application type of an application program; and
determining, from a system resource access permission corresponding to the application type of the application program, a target system resource access permission of the application program according to a preset correspondence between different application types and different system resource access permissions, so as to control, according to the target system resource access permission, access of the application program to a system resource.

2. The method according to claim 1, wherein the determining, from a system resource access permission corresponding to the application type of the application program, a target system resource access permission of the application program according to a preset correspondence between different application types and different system resource access permissions comprises:
searching the preset correspondence between different application types and different system resource access permissions, to determine the system resource access permission corresponding to the application type of the application program; and
using a system resource access permission that is from the system resource access permission corresponding to the application type of the application program and is the same as a system resource access permission applied for by the application program as the target system resource access permission of the application program.

3. The method according to claim 1, wherein the determining, from a system resource access permission corresponding to the application type of the application program, a target system resource access permission of the application program according to a preset correspondence between different application types and different system resource access permissions comprises:
searching the preset correspondence between different application types and different system resource access permissions, and selecting the system resource access permission corresponding to the application type of the application program as the target system resource access permission of the application program.

4. The method according to any one of claims 1 to 3, wherein the acquiring an application type of an application program comprises:
when the application program is provided by a third-party device, acquiring an application type of the application program provided by the third-party device.

5. The method according to any one of claims 1 to 3, wherein the acquiring an application type of an application program comprises:
acquiring an application type, set by a user, of the application program.

6. The method according to claim 1, wherein the determining, from a system resource access permission corresponding to the application type of the application program, a target system resource access permission of the application program according to a preset correspondence between different application types and different system resource access permissions comprises:
when it is detected that the application program is being installed or the application program is running, determining, from the system resource access permission corresponding to the application type of the application program, the target system resource access permission of the application program according to the preset correspondence between different application types and different system resource access permissions.

7. The method according to claim 1, wherein if the application program has multiple application types, the determining, from a system resource access permission corresponding to the application type of the application program, a target system resource access permission of the application program according to a preset correspondence between different application types and different system resource access permissions comprises:
searching the preset correspondence between different application types and different system resource access permissions, and determining the target system resource access permission of the application program from a set consisting of system resource access permissions separately corresponding to the multiple application types of the application program.

8. A permission control apparatus, comprising:
a type acquiring module, configured to acquire an application type of an application program; and
a permission control module, configured to determine, from a system resource access permission corresponding to the application type of the application program, a target system resource access permission of the application program according to a preset correspondence between different application types and different system resource access permissions, so as to control, according to the target system resource access permission, access of the application program to a system resource.

9. The apparatus according to claim 8, wherein the permission control module is specifically configured to: search the preset correspondence between different application types and different system resource access permissions, to determine the system resource access permission corresponding to the application type of the application program; and use a system resource access permission that is from the system resource access permission corresponding to the application type of the application program and is the same as a system resource access permission applied for by the application program as the target system resource access permission of the application program.

10. The apparatus according to claim 8, wherein the permission control module is specifically configured to: search the preset correspondence between different application types and different system resource access permissions, and select the system resource access permission corresponding to the application type of the application program as the target system resource access permission of the application program.

11. The apparatus according to any one of claims 8 to 10, wherein the type acquiring module is specifically configured to: when the application program is provided by a third-party device, acquire an application type of the application program provided by the third-party device.

12. The apparatus according to any one of claims 8 to 10, wherein the type acquiring module is specifically configured to acquire an application type, set by a user, of the application program.

13. The apparatus according to claim 8, wherein the permission control module is specifically configured to: when it is detected that the application program is being installed or the application program is running, determine, from the system resource access permission corresponding to the application type of the application program, the target system resource access permission of the application program according to the preset correspondence between different application types and different system resource access permissions.

14. The apparatus according to claim 8, wherein if the application program has multiple application types, the permission control module is specifically configured to: search the correspondence between different application types and different system resource access permissions, and determine the target system resource access permission of the application program from a set consisting of system resource access permissions separately corresponding to the multiple application types of the application program.

15. An electronic device, comprising a memory and a processor connected to the memory by using a bus, wherein the memory is configured to store a permission control program, and the processor is configured to run the permission control program and instruct the electronic device to execute the following method:
acquiring an application type of an application program; and
determining, from a system resource access permission corresponding to the application type of the application program, a target system resource access permission of the application program according to a preset correspondence between different application types and different system resource access permissions, so as to control, according to the target system resource access permission, access of the application program to a system resource.

16. The electronic device according to claim 15, wherein the determining, from a system resource access permission corresponding to the application type of the application program, a target system resource access permission of the application program according to a preset correspondence between different application types and different system resource access permissions comprises:
searching the preset correspondence between different application types and different system resource access permissions, to determine the system resource access permission corresponding to the application type of the application program; and
using a system resource access permission that is from the system resource access permission corresponding to the application type of the application program and is the same as a system resource access permission applied for by the application program as the target system resource access permission of the application program.

17. The electronic device according to claim 15, wherein the determining, from a system resource access permission corresponding to the application type of the application program, a target system resource access permission of the application program according to a preset correspondence between different application types and different system resource access permissions comprises:
searching the preset correspondence between different application types and different system resource access permissions, and selecting the system resource access permission corresponding to the application type of the application program as the target system resource access permission of the application program.

18. The electronic device according to any one of claims 15 to 17, wherein the acquiring an application type of an application program comprises:
acquiring an application type of the application program provided by the third-party device, or acquiring an application type, set by a user, of the application program.

19. The electronic device according to claim 1, wherein the determining, from a system resource access permission corresponding to the application type of the application program, a target system resource access permission of the application program according to a preset correspondence between different application types and different system resource access permissions comprises:
when it is detected that the application program is being installed or the application program is running, determining, from the system resource access permission corresponding to the application type of the application program, the target system resource access permission of the application program according to the preset correspondence between different application types and different system resource access permissions.

20. The electronic device according to claim 1, wherein if the application program has multiple application types, the determining, from a system resource access permission corresponding to the application type of the application program, a target system resource access permission of the application program according to a preset correspondence between different application types and different system resource access permissions comprises:
searching the preset correspondence between different application types and different system resource access permissions, and determining the target system resource access permission of the application program from a set consisting of system resource access permissions separately corresponding to the multiple application types of the application program.
